# EUROPEAN PATENT SPECIFICATION

(11) **EP 4 156 475 B1**
(45) Date of publication and mention of the grant of the patent: **01.04.2026**
(21) Application number: 21198439.8
(22) Date of filing: 23.09.2021
(51) Int. Cl.: H02K 7/10, H02K 7/18, F03D 9/25, F03D 15/20

(54) **ROTOR LOCK FOR AN ELECTRICAL MACHINE**
ROTORVERRIEGELUNG FÜR EINE ELEKTRISCHE MASCHINE
VERROU DE ROTOR POUR MACHINE ÉLECTRIQUE

(43) Date of publication of application: 29.03.2023
(73) Proprietor: Siemens Gamesa Renewable Energy A/S, 7330 Brande (DK)
(72) Inventor: Jayaraman, Saravanan, 7430 Ikast (DK); Jensen, Simon Vyff, 7160 Tørring (DK)
(74) Representative: SGRE-Association

(56) References cited:
- EP-A1- 2 669 510
- CN-U- 203 039 452
- CN-U- 203 243 181
- US-A1- 2014 021 816
- US-A1- 2015 260 164

## Description

### Field of invention

The present invention relates to rotor locks for electrical machines. Particularly, but not exclusively, the present invention relates to rotor locks in permanent magnet electrical generators for direct drive wind turbines.

### Art Background

An electric machine, such as an electric generator installed in a wind turbine, typically comprises a rotor which rotates about a stator around a central rotational axis. Stator and rotor are separated from each other by an airgap, circumferentially extended around the rotational axis. In a direct drive wind turbine, a permanent magnet electric generator is used, which has the generator rotor directly attached to the wind rotor. The electric machine extends along a longitudinal axis between a drive end and an axially opposite non-drive end. The drive end is attachable to a torque input.

In known applications, a break disc is attached to the rotor for controlling the rotation of the rotor with respect to the stator, in particular for blocking the rotation of the rotor with respect to the stator. In the break disc, several holes are machined to allow for the rotor lock to engage in the brake disc, thus providing a rotor-locking device. Currently, rotor locks are mounted on thick steel plates, on both side of the brake disc. The break disc is typically attached to the rotor at the non-drive end.

Due to recent technology developments, electric machines, in particular electric machines for wind turbines, are becoming bigger and bigger, which means, that loads are also correspondently increasing. Loads on the rotor lock are also consequently increasing, leading to larger components, which increase manufacturing complexity and costs.

It is therefore desirable to provide an electric machine, in particular an electric machine for a wind turbine, including more efficient and cost-effective constructional features of the rotor lock. An electrical machine with a rotor lock is disclosed by US 2014/021816 A1.

### Summary of the Invention

This objective may be solved by the permanent electrical machine according to the independent claim. Advantageous embodiments of the present invention are described by the dependent claims.

According to the present invention, an electric machine according to claim 1 is provided, which includes a stator and a rotor.

By mounting the rotor lock at the drive end, a stator plate provided at the drive end can take most of the loads coming from the torque input and can be more efficiently utilized.

At the non-drive end no structure is needed for the rotor lock. Consequently, it is possible to reduce the size of the brake disc and the machining costs.

According to the present invention, the rotor lock comprises at least one pin for engaging at the same time a stator hole provided on the stator and rotor hole provided on the rotor. The stator hole is provided on a stationary plate of the stator and the rotor hole is provided on the rotary plate of the rotor.

A sandwich structure is provided as a first option of the invention, wherein the stator comprises two stationary plates and one rotary plate between the two stationary plates. Alternatively, according to another option of the invention, the stator comprises two rotary plates and one stationary plate between the two rotary plates.

According to embodiments of the present invention, the stationary plate(s) and/or the rotary plate(s) is/are at least partially radially oriented. The radial position of the rotor lock can be optimized along the radially oriented plate(s), as a function of the torque which is to be applied to the rotor lock.

According to embodiments of the present invention, the rotor lock is active on a rotor flange provided on the rotor adjacent to the longitudinal axis. This may be achieved by using the rotor flange attached to the rotor bearing, which permits the rotation of the rotor about the longitudinal axis.

The pin of the rotor lock is operated between at least a first inactive position and a second locking position. According to embodiments of the present invention, the pin may move from the first inactive position to the second locking position along an activation direction oriented from the inside to the outside of the stator. Advantageously, this permits to house the active part of the rotor lock in a cavity inside the stator.

### Brief Description of the Drawings

The above-defined aspects and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematic section of a wind turbine including an electric machine having a rotor lock according to the present invention.
Fig. 2 shows a longitudinal sectional view of a first embodiment of a rotor lock according to the present invention.
Fig. 3 shows a second longitudinal sectional view of the rotor lock of fig. 2.
Fig. 4 shows a third longitudinal sectional view of the rotor lock of fig. 2.
Fig. 5 shows a longitudinal sectional view of a second embodiment of a rotor lock according to the present invention.
Fig. 6 shows a second longitudinal sectional view of the rotor lock of fig. 5.

### Detailed Description

The illustrations in the drawings are schematically. It is noted that in different figures, similar or identical elements are provided with the same reference signs.

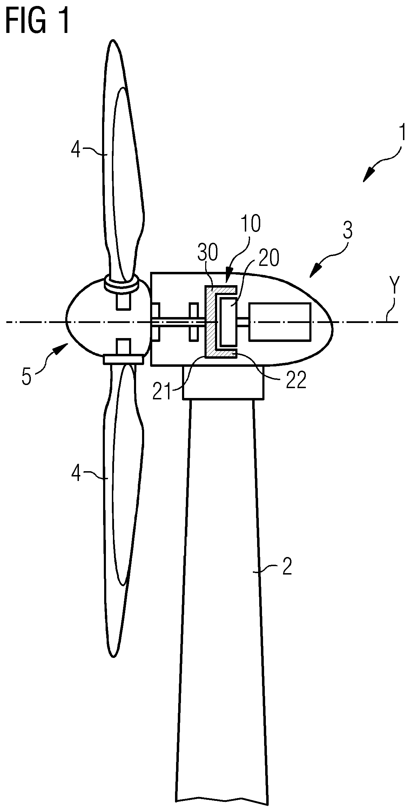

**Figure 1** shows a partial cross-sectional view of a wind turbine 1 including an electric machine 10, i.e. an electric generator. The electric generator 10 may a be a permanent magnet electric generator. The wind turbine 1 comprises a tower 2, which is mounted on a non-depicted foundation. A nacelle 3 is arranged on top of the tower 2. The wind turbine 1 further comprises at least a wind rotor 5 having a hub and at least one blade 4 (in the embodiment of Figure 1, the wind rotor comprises three blades 4, of which only two blades 4 are visible). The wind rotor 5 is rotatable around a rotational axis Y. The terms axial, radial and circumferential in the following are to be intended with reference to the longitudinal axis Y of rotation of the permanent magnet machine 10. The blades 4 extend substantially radially with respect to the rotational axis Y. The permanent magnet machine 10 extends longitudinally between a drive end 21 connected to the wind rotor 5 and an opposite non-drive end 22. The wind rotor 5 provides the torque input, which is transmitted to the electric generator 10 at the drive end 21. The permanent magnet machine 10 includes a stator 20 and a rotor 30. The rotor 10 is rotatable with respect to the stator 11 about the rotational axis Y. In the embodiment of Figure 1, the rotor 10 is radially external with respect the stator 11 and rotatable about the longitudinal axis Y. A circumferential air gap is provided between the stator 11 and the rotor 10.

The wind rotor 5 may be rotationally coupled with the drive end 21 of the rotor 10 directly (direct drive generator). Alternatively, according to other embodiments of the present invention, the wind rotor 5 is rotationally coupled with the rotor 10 by means of a rotatable main shaft and/or through a gear box.

A rotor lock 100 is provided at the drive end 21 for engaging the stator 20 and the rotor 30, thus preventing the rotor 30 from rotating with respect to the stator 20 about the longitudinal axis Y of rotation.

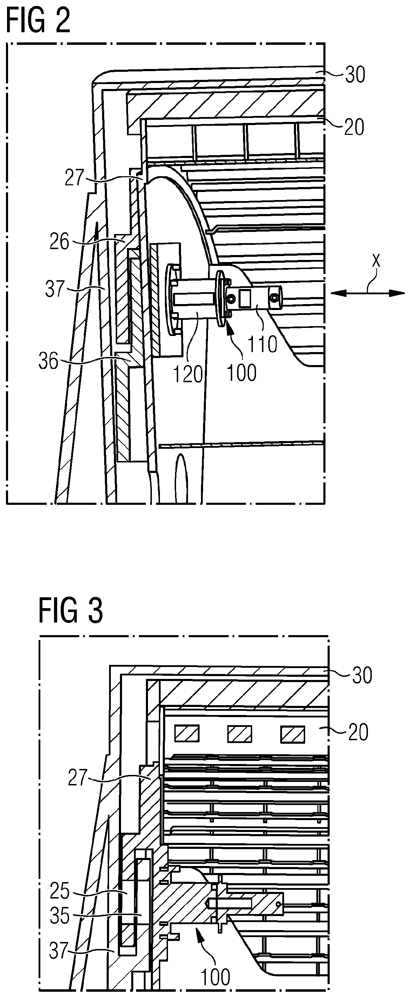

**Figures 2** to **4** show a first embodiment of the rotor lock 100. The rotor lock 100 comprises one or more pins 110 (one pin 110 is shown for each embodiment of the attached figures) for engaging at the same time a stator hole 25 provided on the stator 20 and a rotor hole 35 provided on the rotor 30. The pin 110 is operated between a first inactive position and a second locking position. The pin 110 moves from the first inactive position to the second locking position along an activation direction X oriented from the inside to the outside of the stator 20. The activation direction X may be parallel to the longitudinal axis Y of rotation. The pin 110 is cylindrical and is held by a cylindrical holding structure 120 oriented parallel the activation direction X. The cylindrical structure 120 allows the translation of the pin 110 between the inactive position and the locking position. According to other embodiments of the present invention, the pin 110 and the holding structure 120 may have another shape, for example with a rectangular cross-sectional shape elongated along the activation direction X. The holding structure 120 is fixed to the stator 20 and housed in a cavity provided in the structure of the stator 20, so that the pin 110 in the inactive position is retracted inside the structure of the stator 20 and protrude from the stator 20 for reaching the locking position and engaging the stator hole 25 and the rotor hole 35. The stator 20 comprises a stationary plate 26, on which the stator hole 25 is provided. The rotor 30 comprises a rotary plate 36, on which the rotor hole 35 is provided. The stationary plate 26 and the rotary plate 36 are arranged so that the stator hole 25 and rotor hole 35 may be aligned by rotating the rotor 30 the longitudinal axis Y of rotation. When the stator hole 25 and the rotor hole 35 are aligned, they may be engaged by the pin 110 in the locking position. The stationary plate 26 and the rotary plate 36 are radially oriented with respect to the longitudinal axis Y of rotation. The stationary plate 26 may be part or may be attached to a radial stator front plate 27 provided at the axial end of the stator 20 adjacent to the drive end 21 of the electric generator 10. The rotary plate 36 may be part or may be attached to a radial rotor front plate 37 provided at the axial end of the rotor 30 adjacent to the drive end 21 of the electric generator 10. The stationary plate 26 and the rotary plate 36 may be radially positioned at a distance from the longitudinal axis Y of rotation, which permits achieving a desired rotor lock torque.

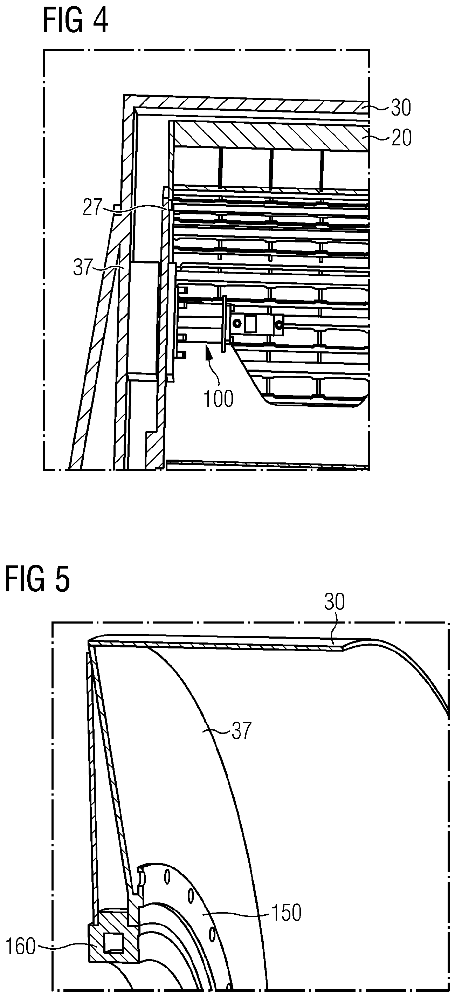

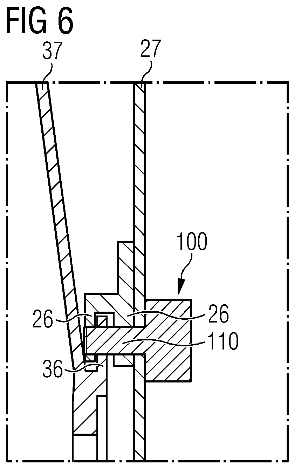

**Figures 5** and **6** show a second embodiment of the rotor lock 100. In the second embodiment the rotor front plate 37 is conically shaped and the rotor lock 100 is active on a rotor flange 150 provided on the rotor 30 adjacent to the longitudinal axis Y. The rotor flange 150 is attached to a bearing 160, which permits the rotation of the rotor 30 about the longitudinal axis Y. As shown in figure 6, the rotor lock 100 may have a sandwich structure comprising two stationary plates 26 and one rotary plate 36 between the two stationary plates 26. The two stationary plates 26 comprises two respective stator holes 25 to be aligned with the rotor hole 35 provided on the one rotary plate 36. The aligned stator holes 25 and rotor hole 35 are to be engaged by the pin 110 in the locking position. According to another embodiment of the invention (not shown), the rotor lock 100 may have another sandwich structure comprising two rotary plates 36 and one stationary plate 26 between the two rotary plates 36. Such a sandwich structure of the rotor lock 100 may be associated also with the first embodiment of figure 4 to 4, having radial stator and rotor front plates 27, 37.

According to other embodiments (not shown), the rotor lock 100 may include different numbers of stationary and rotary plates 26, 36 in a sandwich configuration, for example two stationary plates 26 alternating with two rotary plates 36.

## Claims

1. An electric machine (10) including a stator (20) and a rotor (30) and extending along a longitudinal axis (Y) between a drive end (21) and an axially opposite non-drive end (22), the drive end (21) being attachable to a torque input, the rotor (30) being rotatable with respect to the stator (20) about the longitudinal axis (Y), the rotor (30) being provided externally about the stator (20), the electrical machine (10) comprising:
- a rotor lock (100) engaging the stator (20) and the rotor (30) for preventing the rotor (30) from rotating with respect to the stator (20), the rotor lock (100) comprising at least one pin (110) for engaging at the same time a stator hole (25) provided on the stator (20) and a rotor hole (35) provided on the rotor (30), wherein the rotor lock (100) is provided at the drive end (21), and the stator (20) comprises two stationary plates (26), the stator hole (25) being provided on the stationary plates (26) and the rotor (30) comprises one rotary plate (36), the rotor hole (35) being provided on the rotary plate (36), the rotary plate (36) being between the two stationary plates (26), or the stator (20) comprises one stationary plate (26), the stator hole (25) being provided on the stationary plate (26) and the rotor (30) comprise two rotary plates (36), the rotor hole (35) being provided on the rotary plates (36), the stationary plate (26) being between the two rotary plates (36).

2. The electric machine (10) according to claim 1, wherein the stationary plate(s) (26) and/or the rotary plate(s) (36) is/are at least partially radially oriented.

3. The electric machine (10) according to any of the previous claims, wherein the stationary plate(s) (26) and/or the rotary plate(s) (36) is/are at least partially conically shaped.

4. The electric machine (10) according to any of the previous claims, wherein the rotor lock (100) is active on a rotor flange (150) provided on the rotor (30) adjacent to the longitudinal axis (Y).

5. The electric machine (10) according to any of the previous claims, wherein the pin (110) is operated between a first inactive position and a second locking position, the pin (110) moving from the first inactive position to the second locking position along an activation direction (X) oriented from the inside to the outside of the stator (20).

6. A wind turbine (1) including the electric machine (10) according to any of the previous claims, the electric machine (10) being an electric generator.

## Patentansprüche

1. Elektrische Maschine (10), die einen Stator (20) und einen Rotor (30) beinhaltet und sich entlang einer Längsachse (Y) zwischen einem Antriebsende (21) und einem axial gegenüberliegenden Nicht-Antriebsende (22) erstreckt, wobei das Antriebsende (21) an einem Drehmomenteingang anbringbar ist, der Rotor (30) in Bezug auf den Stator (20) um die Längsachse (Y) drehbar ist, der Rotor (30) außerhalb um den Stator (20) bereitgestellt ist und die elektrische Maschine (10) Folgendes umfasst:
- eine Rotorverriegelung (100), die den Stator (20) und den Rotor (30) in Eingriff nimmt, um zu verhindern, dass sich der Rotor (30) in Bezug auf den Stator (20) dreht, wobei die Rotorverriegelung (100) mindestens einen Stift (110) umfasst, um gleichzeitig ein Statorloch (25), das an dem Stator (20) bereitgestellt ist, und ein Rotorloch (35), das an dem Rotor (30) bereitgestellt ist, in Eingriff zu nehmen, wobei die Rotorverriegelung (100) an dem Antriebsende (21) bereitgestellt ist und der Stator (20) zwei stationäre Platten (26) umfasst, wobei das Statorloch (25) an den stationären Platten (26) bereitgestellt ist und der Rotor (30) eine Drehplatte (36) umfasst, wobei das Rotorloch (35) an der Drehplatte (36) bereitgestellt ist, wobei die Drehplatte (36) zwischen den zwei stationären Platten (26) ist oder der Stator (20) eine stationäre Platte (26) umfasst, wobei das Statorloch (25) an der stationären Platte (26) bereitgestellt ist und der Rotor (30) zwei Drehplatten (36) umfasst, wobei das Rotorloch (35) an den Drehplatten (36) bereitgestellt ist, wobei die stationäre Platte (26) zwischen den zwei Drehplatten (36)ist.

2. Elektrische Maschine (10) nach Anspruch 1, wobei die stationäre(n) Platte(n) (26) und/oder die Drehplatte(n) (36) mindestens teilweise radial ausgerichtet ist/sind.

3. Elektrische Maschine (10) nach einem der vorhergehenden Ansprüche, wobei die stationäre(n) Platte(n) (26) und/oder die Drehplatte(n) (36) mindestens teilweise konisch geformt ist/sind.

4. Elektrische Maschine (10) nach einem der vorhergehenden Ansprüche, wobei die Rotorverriegelung (100) an einem Rotorflansch (150) aktiv ist, der an dem Rotor (30) benachbart zu der Längsachse (Y) bereitgestellt ist.

5. Elektrische Maschine (10) nach einem der vorhergehenden Ansprüche, wobei der Stift (110) zwischen einer ersten inaktiven Position und einer zweiten Verriegelungsposition betrieben wird, wobei sich der Stift (110) entlang einer Aktivierungsrichtung (X), die von der Innenseite zu der Außenseite des Stators (20) ausgerichtet ist, aus der ersten inaktiven Position in die zweite Verriegelungsposition bewegt.

6. Windturbine (1), beinhaltend die elektrische Maschine (10) nach einem der vorhergehenden Ansprüche, wobei die elektrische Maschine (10) ein Stromerzeuger ist.

## Revendications

1. Machine électrique (10) incluant un stator (20) et un rotor (30) et s'étendant le long d'un axe longitudinal (Y) entre une extrémité d'entraînement (21) et une extrémité opposée axialement non entraînante (22), l'extrémité d'entraînement (21) pouvant être fixée à une entrée de couple, le rotor (30) pouvant tourner par rapport au stator (20) autour de l'axe longitudinal (Y), le rotor (30) étant disposé extérieurement autour du stator (20), la machine électrique (10) comprenant :
- un dispositif de blocage de rotor (100) mettant en prise le stator (20) et le rotor (30) pour empêcher le rotor (30) de tourner par rapport au stator (20), le dispositif de blocage de rotor (100) comprenant au moins une goupille (110) pour mettre en prise en même temps un trou de stator (25) prévu sur le stator (20) et un trou de rotor (35) prévu sur le rotor (30), dans lequel le dispositif de blocage de rotor (100) est prévu au niveau de l'extrémité d'entraînement (21), et le stator (20) comprend deux plaques stationnaires (26), le trou de stator (25) étant prévu sur les plaques stationnaires (26) et le rotor (30) comprend une plaque rotative (36), le trou de rotor (35) étant prévu sur la plaque rotative (36), la plaque rotative (36) étant entre les deux plaques stationnaires (26), ou le stator (20) comprend une plaque stationnaire (26), le trou de stator (25) étant prévu sur la plaque stationnaire (26) et le rotor (30) comprend deux plaques rotatives (36), le trou de rotor (35) étant prévu sur les plaques rotatives (36), la plaque stationnaire (26) étant entre les deux plaques rotatives (36).

2. Machine électrique (10) selon la revendication 1, dans laquelle la ou les plaques stationnaires (26) et/ou la ou les plaques rotatives (36) sont au moins partiellement orientées radialement.

3. Machine électrique (10) selon l'une quelconque des revendications précédentes, dans laquelle la ou les plaques stationnaires (26) et/ou la ou les plaques rotatives (36) sont au moins partiellement de forme conique.

4. Machine électrique (10) selon l'une quelconque des revendications précédentes, dans laquelle le dispositif de blocage de rotor (100) est actif sur une bride de rotor (150) prévue sur le rotor (30) adjacente à l'axe longitudinal (Y).

5. Machine électrique (10) selon l'une quelconque des revendications précédentes, dans laquelle la goupille (110) est actionnée entre une première position inactive et une seconde position de verrouillage, la goupille (110) se déplaçant de la première position inactive à la seconde position de verrouillage le long d'une direction d'activation (X) orientée de l'intérieur vers l'extérieur du stator (20).

6. Éolienne (1) comprenant la machine électrique (10) selon l'une quelconque des revendications précédentes, la machine électrique (10) étant un générateur électrique.
